Europäisches Patentamt

European Patent Office

Office européen des brevets

(11) Veröffentlichungsnummer: **0 151 461**
A2

## (12) EUROPÄISCHE PATENTANMELDUNG

(21) Anmeldenummer: 85100953.0

(22) Anmeldetag: 30.01.85

(51) Int. Cl.⁴: **B 29 C 67/20**
B 29 C 67/16, B 29 C 39/08
//B29K105/16

(30) Priorität: 08.02.84 DE 3404479
03.07.84 DE 3424474

(43) Veröffentlichungstag der Anmeldung:
14.08.85 Patentblatt 85/33

(84) Benannte Vertragsstaaten:
DE FR IT

(71) Anmelder: Siemens Aktiengesellschaft
Berlin und München Wittelsbacherplatz 2
D-8000 München 2(DE)

(72) Erfinder: Burger, Hans-Joachim
Fasanenweg 1
D-8451 Kümmersbruck(DE)

(72) Erfinder: Schuster, Hubert
Haus Nr. 17
D-8451 Oberleinsiedl(DE)

(54) Verfahren zur Herstellung eines Leichtwerkstoffes.

(57) Die Erfindung bezieht sich auf ein Verfahren zur Herstellung eines Leichtwerkstoffes, insbesondere zur Verwendung als Anpaßschichtmaterial bei Ultraschallwandlern. Der Leichtwerkstoff besteht aus einem leichten Füllmaterial, vorzugsweise Mikro-Glashohlkugeln, das mittels Harzen, vorzugsweise Epoxid- oder Polyesterharzen, gebunden wird. Hierzu wird das Füllmaterial in eine Zentrifuge eingeführt und vom dünnflüssigen Harz überdeckt. Besonders vorteilhaft ist es, auf die Glaskugeln ein Filtermaterial aufzubringen, das durch ein Gewicht auf die Glaskugeln gedrückt wird und durch das das dünnflüssige Harz gefiltert werden kann, so daß keine Verunreinigungen im Harz zwischen die Glaskugeln dringen können.

Siemens Aktiengesellschaft
Berlin und München

Unser Zeichen
VPA 84 P 3036 E

## Verfahren zur Herstellung eines Leichtwerkstoffes

Die Erfindung bezieht sich auf ein Verfahren zur Herstellung eines Leichtwerkstoffes, der aus leichtem Füllmaterial, das mittels Harzen gebunden wird, besteht.

Besonders für anspruchsvolle Anwendungen, z.B. im Ultraschallbereich, werden Leichtwerkstoffe hoher Festigkeit, geringen spezifischen Gewichtes von ca. 0,5 kg/cm³, homogenen Gefüges, guter Wasserdichtigkeit, guter Temperaturfestigkeit und hoher Lösungsmittelfestigkeit gefordert. Das geringe Schüttgewicht von Hohlkugeln erlaubt nur bedingt das Vermischen mit Harzen im Rührer. Auch die Anwendung von Vakuum beim Rührvorgang bringt nicht den gewünschten Erfolg beim Austreiben der Luft zwischen den Hohlkugeln.

Durch die Erfindung wird das aufgezeigte Problem dadurch gelöst, daß das Füllmaterial in eine Zentrifuge eingeführt und von dünnflüssigem Harz überdeckt wird und danach beide Komponenten bis zum Vermischen und gegebenenfalls bis zur Aushärtung zentrifugiert werden. Die oben geforderten Eigenschaften werden noch besser erreicht, wenn nach dem Einführen des Füllmaterials ein Filtermaterial und ein Gewicht nacheinander auf das Füllmaterial gebracht werden und auf das Gewicht das dünnflüssige Harz vor dem Zentrifugieren aufgebracht wird und wenn das Gewicht Durchlässe für das Harz aufweist. Hierbei hat es sich als vorteilhaft erwiesen, wenn als Füllmaterial Mikrohohlkugeln, insbesondere Glashohlkugeln, Verwendung finden. Unter den leichtflüssigen Harzen hat sich als besonders günstig Epoxid- oder Polyesterharz herausgestellt.

La 2 Syr / 15.01.1985

Eine weitere Möglichkeit der Lösung des aufgezeigten Problems besteht darin, daß die Mikro-Hohlglaskugeln mit fein pulverisiertem Reaktionsfestharz vermischt werden, in Formen gefüllt, leicht beschwert und vorzugsweise mittels Mikrowellen gehärtet und hernach mit dünnflüssigen Reaktionsharzen gefüllt werden, die anschließend aushärten. Auch hier hat sich die Verwendung von Epoxid- oder Polyesterharzen als Reaktionsfestharz bewährt. Der noch nicht gefüllte poröse Sinterkörper hat hier ein spezifisches Gewicht von ca. 0,2 bis 0,3g pro cm$^3$. Das Füllen zur Wasserdichtigkeit und Erhöhung der Festigkeit mit den dünnflüssigen Reaktionsharzen kann ohne Hilfsmittel, mit Vakuum oder auch mit einer Zentrifuge eingebracht werden. In den meisten Fällen genügt ein Auftropfen dünner Harze auf die Sinterkörper. Das Aushärten kann bei Raumtemperatur oder erhöhter Temperatur erfolgen. Das spezifische Gewicht des fertigen Materials liegt vorzugsweise bei ca. 0,5 bis 0,6 Gramm pro cm$^3$. Der gehärtete Werkstoff kann vor dem Füllen aus der Form entnommen werden; er kann aber auch in der Form gefüllt werden. In beiden Fällen hat sich die Verwendung einer Form aus Polymethylpenten als vorteilhaft erwiesen, da der Körper trennmittelfrei entformt werden kann. Die Herstellung des Leichtwerkstoffes kann auch mit dem Verkleben auf Kombinationsteile, wie Piezokeramik o.ä. gleichzeitig erfolgen. Soll der Leichtwerkstoff farbig ausgeführt werden, so kann das dünnflüssige Tränkharz eingefärbt werden.

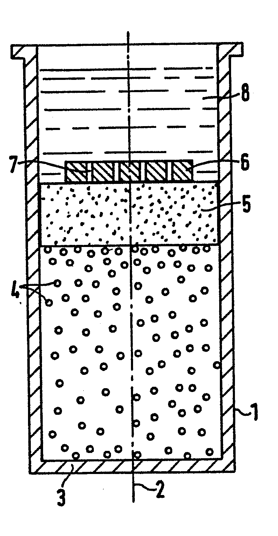

Anhand der Zeichnung wird das Verfahren näher erläutert.

Die Zeichnung zeigt einen Behälter 1, der in einer Zentrifuge beispielsweise um die Achse 2 drehbar gelagert ist. Der Behälter 1 ist als Hohlzylinder mit dem Boden 3 ausgebildet. Zunächst werden in diesem Behälter Mikro-Glashohlkugeln 4 eingefüllt, die mit einem Filtermaterial 5, z.B. aus gesintertem Ferroplastpulver, als Stopfen abgedeckt werden. Auf dieses Filtermaterial wird ein

0151461

Gewicht 6 aufgelegt, das nicht den gesamten Querschnitt des Behälters 1 ausgefüllt und gegebenenfalls zusätzlich Durchbrechungen 7 aufweist, durch die das dann eingefüllte dünnflüssige Harz 8 hindurchdringen kann. Das Gewicht 6 sorgt für eine entsprechende Kompression der Glashohlkugeln 4. Wird nun der Behälter 1 in Rotation versetzt, so wird durch die Einwirkung der Zentrifugalkraft der Filterstopfen 5 weiterhin auf die Glaskugeln gedrückt, das Harz durchdringt den Filterstopfen und füllt die Hohlräume zwischen den Glashohlkugeln aus. Die Aushärtung des Leichtwerkstoffes kann während der Rotation oder nach entsprechender Verdichtung stattfinden. Dies so hergestellte Material wird mit Vorteil bei Ultraschallwandlern als Anpaßschichtmaterial benutzt.

8 Patentansprüche
1 Figur

Patentansprüche

1. Verfahren zur Herstellung eines Leichtwerkstoffes, der aus leichtem Füllmaterial, das mittels Harzen gebunden wird, besteht, d a d u r c h   g e k e n n z e i c h - n e t ,   daß das Füllmaterial (4) in eine Zentrifuge eingeführt und von dünnflüssigem Harz (8) überdeckt wird und danach beide Komponenten bis zum Vermischen und gegebenenfalls bis zur Aushärtung zentrifugiert werden.

2. Verfahren nach Anspruch 1, d a d u r c h   g e - k e n n z e i c h n e t ,   daß nach dem Einführen des Füllmaterials (4) ein Filtermaterial (5) und ein Gewicht (6) nacheinander auf das Füllmaterial (4) gebracht werden und auf das Gewicht (6) das dünnflüssige Harz (8) vor dem Zentrifugieren aufgebracht wird und daß das Gewicht (6) Durchlässe (7) für das Harz (8) aufweist.

3. Verfahren nach Anspruch 1 oder 2, d a d u r c h g e k e n n z e i c h n e t ,   daß als Füllmaterial (4) Mikrohohlkugeln Verwendung finden.

4. Verfahren nach Anspruch 3, d a d u r c h   g e - k e n n z e i c h n e t ,   daß die Mikrohohlkugeln Glashohlkugeln (4) sind.

5. Verfahren nach einem der vorhergehenden Ansprüche, d a d u r c h   g e k e n n z e i c h n e t ,   daß als Harz ein Epoxid- oder Polyesterharz Verwendung findet.

6. Verfahren zur Herstellung eines Leichtwerkstoffes, der aus leichtem Füllmaterial in Form von Mikro-Hohlglaskugeln, das mittels Harzen, vorzugsweise Epoxid- oder Polyesterharzen, gebunden wird, besteht, nach Anspruch 4, d a - d u r c h   g e k e n n z e i c h n e t ,   daß die Mikro- Hohlglaskugeln mit fein pulverisiertem Reaktionsfestharz

0151461

vermischt werden, in Formen gefüllt, leicht beschwert und vorzugsweise mittels Mikrowellen gehärtet und hernach mit dünnflüssigen Reaktionsharzen gefüllt werden, die anschließend aushärten.

7. Verfahren nach Anspruch 6, d a d u r c h   g e - k e n n z e i c h n e t , daß der gehärtete Werkstoff vor dem Füllen aus der Form entnommen wird.

8. Form zur Durchführung des Verfahrens nach Anspruch 6 oder 7, d a d u r c h   g e k e n n z e i c h n e t , daß die Form aus Polymethylpenten besteht.

0151461
84 P 3036